(19) Europäisches Patentamt / European Patent Office / Office européen des brevets

(11) **EP 2 456 141 B1**

(12) **EUROPEAN PATENT SPECIFICATION**

(45) Date of publication and mention
of the grant of the patent:
**09.08.2017 Bulletin 2017/32**

(21) Application number: **11189261.8**

(22) Date of filing: **15.11.2011**

(51) Int Cl.:
*H04L 12/729* (2013.01)          *H04L 12/707* (2013.01)

(54) **Method and device for determination of communication paths**

Verfahren und Vorrichtung zur Bestimmung von Kommunikationspfaden

Procédé et dispositif de détermination de chemins de communication

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **17.11.2010 EP 10306268**

(43) Date of publication of application:
**23.05.2012 Bulletin 2012/21**

(73) Proprietor: **Thomson Licensing
92130 Issy-les-Moulineaux (FR)**

(72) Inventors:
• **Bichot, Guillaume
35576 Cesson-Sevigne (FR)**
• **Gouache, Stephane
35576 Cesson-Sevigne (FR)**

(74) Representative: **Rolland, Sophie
TECHNICOLOR
1-5, rue Jeanne d'Arc
92130 Issy-les-Moulineaux (FR)**

(56) References cited:
**US-A1- 2003 065 816     US-A1- 2004 077 341
US-A1- 2008 310 419     US-B1- 7 583 677**

• **YLITALO J ET AL: "Dynamic network interface
selection in multihomed mobile hosts", SYSTEM
SCIENCES, 2003. PROCEEDINGS OF THE 36TH
ANNUAL HAWAII INTERNATI ONAL
CONFERENCE ON 6-9 JAN. 2003, PISCATAWAY,
NJ, USA,IEEE, 6 January 2003 (2003-01-06),
pages 315-324, XP010626772, ISBN:
978-0-7695-1874-9**

## Description

### Technical domain of the invention

The invention relates to transmissions of packets of data between items of communication equipment that comprise, for some, at least one specific communication interface to connect to an access network, and for others, at least two communication interfaces having different communication addresses in order to be able to possibly transmit in multipath mode.

It is understood here by "communication path" a path connecting two items of communication equipment via two communication interfaces (one per item of equipment) each defined by a communication address (for example an IP address). A communication path is thus identified by the pair of communication addresses of two communication interfaces.

Moreover, it is understood here by "item of communication equipment" any equipment type comprising at least one communication interface, wired or wireless and capable of exchanging packets of data with another item of communication equipment, possibly of a different type. Consequently, it may involve a fixed or mobile telephone, possibly of "smartphone" type, a fixed or portable computer, a Personal Digital Assistant (PDA including a "pocket PC"), a content receiver (such as for example a decoder, a residential gateway or a Set-Top Box (STB), or an item of network equipment (such as for example a content server).

### Prior art

As known to those skilled in the art, when a first item of (communication) equipment has at least two communication interfaces that can connect to different access networks, it is able to exchange data, in the scope of a communication session, and according to at least two different communication paths, with a second item of (communication) equipment and having at least one communication interface able to connect to an access network. In this case, the communication session can be of mutipath type. The first item of equipment must then implement a packet transmission strategy in order to select one or several communication paths according to requirements of the application concerned (and particularly of the type of data that it uses or produces) and the characteristics and respective states of the communication paths that exist between it and the second item of equipment. These characteristics and states must be compatible with the current states of different access networks that are borrowed by the communication paths, and are updated regularly due to measurements.

Among various strategies, US 2008/0310419 for instance describes selecting a communication interface based on historical connection information representing the performance of previous network connections that the computer has established through the various communication interfaces. However US 2008/0310419 fails to disclose multiple communication paths and might not take into account some local information as explained hereafter.

As a non-restrictive example, when the communication session relates to a video broadcast application, each communication path can be characterized by parameters such as bandwidth or "binary debit" (in fact they concern equivalent appellations having a same unit, namely a number of bits per unit of time), packet jitter, the transmission time of packets (or "delay"). These parameters can be measured (or estimated) via diverse techniques called end-to-end techniques which are not generally trivial due to the fact that they must be non-intrusive (that is to say they must not cause interferences). For example when the transport protocol is of TCP (Transmission Control Protocol) or SCTP (Stream Control Transmission Protocol - defined notably in the regulations RFC 4960 and 5061 of the IETF) type, a Westwood type algorithm can be used to continuously measure the available bandwidth on a communication path via duplicated acknowledgements of packets transmitted and at the packet arrival time intervals.

However, even if the packet transmission strategy of a first item of equipment to multiple communication interfaces, during a communication session, uses precise parameter values and personal local information (such as for example the use cost of an interface linked to the use cost of its access network), it does not take account of the at least one item of local information specific to the second item of equipment (or end point) that participates in this communication session, namely the maximum bandwidth that it is prepared to support in reception. However, knowledge of at least this item of local information of the second item of equipment could advantageously influence the first item of equipment during its selection of communication paths.

It will be noted that, when the second item of equipment has several communication interfaces, some other elements of these items of local personal information could also be useful to the first item of equipment during its selection of communication path(s). This is for example the case of the use cost of an interface linked to the use cost of its access network, the possibility of controlling the Quality of Service (QoS) on a communication interface, and the energy consumption for a given bandwidth (it can vary from one communication interface to another according to the place considered and/or the time).

### Summary of the invention

The purpose of the invention is thus to improve the situation, and more specifically to enable a packet transmission strategy taking into account certain items of local information known to items of equipment (intermediary points or end points) that participate in communication sessions.

For this purpose, the invention proposes notably a first method, dedicated to the transmission of information between two items of communication equipment in the scope of a communication session using at least two communication paths, one of these items of equipment having at least two communication interfaces having different communication addresses, and the other having at least one communication interface having a communication address, and comprising:

- a step (i) consisting in generating in one at least of the items of communication equipment a control message containing each communication address of each of its communication interfaces, associated with at least one first item of information representative of a maximum bandwidth that can be attained in reception, and
- a step (ii) consisting in transmitting the control message to the other item of communication equipment in order to determine at least one communication path, a step of receiving in said first communication equipment from said second communication equipment, packets of said communication session on at least one of the communication paths existing between one of the communication interfaces of said second communication equipment and one of the communications interfaces of said first communication equipment wherein said at least one communication path used in reception is determined according to at least a maximum bandwidth that can be attained in reception for this interface of said first communication equipment and bandwidths that can be used on said communication paths.

By "maximum bandwidth that can be attained" is understood here the maximum bandwidth that an item of equipment can support in reception on a given interface.

The first method according to the invention can comprise other characteristics that can be taken individually or in combination, and particularly:

- at step (i) the control message generated can also contain, for each communication interface, a second item of information that is representative of a level of use priority of this communication interface,
- the maximum bandwidth that can be attained in reception at the level of an interface can be equal to the average value of the bandwidth that can be used in reception at the level of this interface, for the communication session considered,
- each control message can be in accordance with the SCTP (Stream Control Transmission Protocol) transport protocol.

The invention also proposes a second method, dedicated to the determination of communication path(s) for packets of a communication session using at least two communication paths established between two items of communication equipment, a first of these items of equipment having at least one communication interface having a communication address, and a second of these items of equipment having at least two communication interfaces having different communication addresses. This second method comprises a step consisting in selecting at least one communication path that exists between a communication interface of the first item of communication equipment and a communication interface of the second item of communication equipment, according to at least a maximum bandwidth that can be attained in reception for this first interface and bandwidths that can be used on the existing communication paths, for the purpose of transmission of packets of the communication session of the second item of equipment to the first item of equipment.

The second method according to the invention can comprise other characteristics that can be taken individually or in combination, and particularly:

- when the first item of communication equipment comprises at least two communication interfaces having different communication addresses, one of these communication interfaces can be selected so that it constitutes one end of the selected communication path, according to use priority levels that are associated with them,
- the selection can be carried out from among the communication interfaces of the first item of communication equipment that are associated with a maximum bandwidth that can be attained in reception that is greater than the bandwidth of packets of the communication session that must be transmitted,
- when the bandwidth that can (effectively) be used on the selected communication path is strictly less than the maximum bandwidth that can be attained in reception for the communication interface of the first item of communication equipment that constitutes one end of the selected communication path, at least one other communication path can be selected that exists between another of the communication interfaces of the second item of communication equipment and this communication interface of the first item of communication equipment, so that packets of the communication session are transmitted on each selected communication path.

The invention also proposes a first device, dedicated to the generation of control messages for a communication session between two items of communication equipment, one of them having at least two communication interfaces having different communication addresses, and the other having at least one communication interface having a communication address, and adapted to generate for one of the items of communication equipment a control message that contains each communication address of each of the communication interfaces associated with at least a first item of information representative of a maximum bandwidth that can be attained in reception, and that is intended for the other item of communication equipment.

The first device according to the invention can comprise other characteristics that can be taken separately or in combination, and notably:

- it can be adapted to generate a control message that also contains, for each communication interface, a second item of information that is representative of a use priority level of the communication interface,
- it can be adapted to introduce in the control message a maximum bandwidth that can be attained in reception at the level of an interface that is equal to the average value of the bandwidth that can (effectively) be used in reception at the level of this interface, for the communication session considered,
- it can be adapted to generate control messages that are in accordance with the SCTP transport protocol.

The invention also proposes a second device, dedicated to the determination of communication path(s) for packets of a communication session between two items of communication equipment, a first of them having at least one communication interface having a communication address and a second of them having at least two communication interfaces having different communication addresses.

This second method is characterized by the fact that it comprises first means for selection adapted for selecting at least one communication path that exists between a communication interface of the first item of communication equipment and a communication interface of the second item of communication equipment, according to at least a maximum bandwidth that can be attained in reception for this first interface and bandwidths that can be used on the existing communication paths, for the purpose of transmission of packets of the communication session of the second item of equipment to the first item of equipment.

Moreover, the first means for selection of this second device can also be adapted for when the first item of communication equipment comprises at least two communication interfaces having different communication addresses, to select one of these communication interfaces so that it constitutes one end of the selected communication path, according to use priority levels that are associated with them.

The invention also proposes an item of communication equipment comprising, on one hand, at least one communication interface having a communication address, and, on the other hand, a device for generation of control messages of the type of that presented previously and/or a device for determination of communication path(s) of the type presented previously.

Brief description of the drawings

Other characteristics and advantages of the invention will appear upon examination of the detailed description hereafter, and of the figure in the appendix in which the single figure diagrammatically and functionally shows two items of communication equipment each equipped with a device for generation of control messages according to the invention and a device for determination of communication path(s) according to the invention and specific communication interfaces to connect to an access network while the other item of equipment has two specific communication interfaces to connect respectively to two different access networks.

The annexed drawing can be used not only to complete the invention, but also to contribute to its definition, if necessary.

Detailed description

The purpose of the invention is to enable account to be taken of certain items of local information, known to items of communication equipment (intermediary points or end points) Ej that participate in communication sessions, during the selection of communication paths.

Hereafter, it is considered as a non-restrictive example that the items of communication equipment Ej are fixed computers or content servers. But, the invention is not limited to these types of communication equipment. It relates to in fact any equipment type Ej comprising at least one communication interface $I_{ji}$, wired or wireless and capable of exchanging packets of data with another item of communication equipment Ej' (j' ≠ j), possibly of a different type. Consequently, it could also involve, for example, a fixed telephone, a fixed or portable computer, a Personal Digital Assistant (or PDA, including a pocket PC), a content receiver (such as for example a decoder, a residential gateway or a Set-Top Box (STB), or any other item of network equipment implicated in the transmission of packets of data.

A non-restrictive example of pairing between two items of (communication) equipment Ej (j = 1 or 2) is diagrammatically shown in the figure.

The first item of equipment E1 (j = 1) comprises, in this example, a single communication interface $I_{11}$ able to connect to a first access network R1, for example of ADSL type. This first item of equipment E1 is for example a fixed computer.

The second item of equipment E2 (j = 2) comprises, in this non-restrictive example, two communication interfaces $I_{2i}$. The first communication interface $I_{21}$ (i = 1) is able to connect to a second access network R2, for example of ADSL type (possibly identical to R1). The second communication interface $I_{22}$ (i = 2) is able to connect to a third access network R3, for example of WiFi type, and paired to the first R1 and second R2 access networks. This second item of equipment E2 is for example a content server (of videos for example).

Moreover, in the non-restrictive example shown, a first packet communication path $C_1$ (m = 1) can be established between the single (communication) interface $I_{11}$ of the first item of equipment E1 and the first (communication) interface $I_{21}$ of the second item of equipment via the first access network R1 and the second access network R2, and a second packet communication path $C_2$ (m = 2) can be established between the single (communication) interface $I_{11}$ of the first item of equipment E1 and the second interface $I_{22}$ of the second item of equipment E2 via the access network R1 and the third access network R3.

In order that the items of equipment Ej can know certain items of local information of items of equipment Ej' with which they want to establish communication sessions, the invention proposes to implement a first method for transmission of information between items of equipment Ej.

This first method comprises two steps (i) and (ii).

A first step (i) consists in generating in one at least of the items of equipment Ej a control message that contains each communication address of each of its (communication) interfaces $I_{ji}$, associated with at least a first item of information that is representative of a maximum bandwidth that can be attained (and thus that can be at best attained) in reception $K_{ji}$.

The maximum bandwidth (or maximum binary bitrate) that can be attained in reception $K_{ji}$ at the level of an interface $I_{ji}$ of a given item of equipment Ej can, for example, be equal to the average value of the bandwidth that is (effectively) able to be used in reception at the level of this interface $I_{ji}$, for the communication session considered. For example, the total bandwidth of the ADSL link between the first item of equipment E1 and the first access network R1 can be equal to 8 Mbps and the average value of the bandwidth that can be used in reception at the level of its interface $I_{11}$ for a video downloading type communication session at the second item of equipment E2 can be equal to 2.5 Mbps. In this case, the maximum bandwidth that can be attained in reception $K_{11}$ at the interface $I_{11}$ can be equal to 2.5 Mbps.

It will be noted that when an interface $I_{j'i}$ of an item of equipment Ej' constitutes the end of several (at least two) communication paths $C_m$ of which the opposite ends are constituted by at least one of the interfaces $I_{ji}$ of another item of equipment Ej (j ≠ j'), as is the case of the single interface $I_{11}$ of the first item of equipment E1, its maximum bandwidth (or maximum binary debit) that can be attained in reception $K_{j'i}$ can be considered as the sum of maximum bandwidths that can be attained in reception $k_m$ at the level of this interface $I_{j'i}$ for the different communication paths $C_m$ cited previously, for the communication session considered (or $K_{j'i} = \sum_{m(j',i)} k_m$). For example, in the example shown $K_{11} = k_1 + k_2$.

It will also be noted that, when an item of equipment Ej comprises several (at least two) interfaces $I_{ji}$, it is possible, in the first step (i), to add to the control message that is generated, for each interface $I_{ji}$, as second item of associated information that is representative of a level of use priority of this communication interface $I_{ji}$. For example, in the case of the second item of equipment E2, it may be desired that the first interface $I_{21}$ is used in priority. The second interface $I_{22}$ has thus less priority (it must then be used when the first interface $I_{21}$ can not be used or in compliment with this latter ($I_{21}$) when the bandwidth that can be used on the first communication path $C_1$ does not suffice for the requirements of the application concerned by the second communication session considered).

The level of use priority is relative within a given item of equipment Ej. For example the smaller the value of the level the more the corresponding interface $I_{ji}$ must be used in priority. It is considered hereafter that an interface $I_{ji}$ having a use priority level of a value equal to one (1) has greater priority than an interface $I_{ji'}$, (i' ≠ i) having a use priority level of a value equal to two (2).

It is important to note that the level of use priority and/or the maximum bandwidth that can be attained in reception $K_{ji}$ at the level of an interface $I_{ji}$ of a given item of equipment Ej can possibly vary according to the day and/or time and/or place. Moreover, an item of equipment Ej can change at an instant the indication of the maximum bandwidth that can be attained in reception ($K_{ji}$) (and/or the indication of the average bandwidth) associated with a local interface $I_{ji}$ due to, for example, a higher estimation of upstream traffic (in the case where there is no separation between upstream and downstream traffic).

For example, each control message can be in accordance with the SCTP (Stream Control Transmission Protocol) transport protocol. But, any other transport protocol able to support "multihoming", and thus multipaths, can be used. For example, INIT and ASCONF type messages of the SCTP protocol can be modified in order to add local information to them (the maximum bandwidth that can be attained in reception $K_{ji}$ as well as possible the use priority level) relative to each interface $I_{ji}$. Thus, in the case of IPv4 type communication addresses, the value of the "length" field can be changed to pass from 8 bits to 12 bits, then to add to the field dedicated to the definition of an IPv4 address (32 bits) or a first field dedicated to the definition of $K_{ji}$ (28 bits) and a second field dedicated to the definition of use priority level (4 bits). In the case of IPv6 type communication addresses, the value of the "length" field ("length" equal to 20 bits) can be conserved then added to the field dedicated to the definition of an IPv6 address (128 bits) or a field dedicated to the definition of $K_{ji}$ (32 bits), or a first field dedicated to the definition of $K_{ji}$ (28 bits) and a second field dedicated to the definition of use priority level (4 bits).

It will be noted that this first step (i) can be implemented by means of first devices (for generation of control messages) $D1_j$ that are respectively associated with the items of equipment $E_j$. Each first device $D1_j$ is thus responsible for generating control messages.

It is understood here by "associated" both the fact of being an integral part of an item of equipment $E_j$ (as shown) and the fact of being paired directly or indirectly with an item of equipment $E_j$. Consequently, a first device (for generation of control messages) $D1_j$ can be implemented in the form of software modules, or electronic circuits, or a combination of electronic circuits and software modules.

A second step (ii) of the first method consists in transmitting a control message, that was generated by a first item of equipment (for example E1), to a second item of equipment (for example E2), in order to determine, notably according to each first item of information that it contains, at least one communication path $C_m$ to transmit packets of the communication session considered between one of these communication interfaces $I_{2i}$ and one of the communication interfaces $I_{1i}$ (here $I_{11}$) of the first item of equipment E1 (that transmitted the control message).

In order to be able to use the local information that is contained in the control messages described previously, the invention proposes to implement a second method dedicated to the determination of communication paths of packets of a communication session between two items of equipment $E_j$.

This second method comprises a step consisting in selecting, in order to enable the transmission of packets of the communication session considered, at least one of the communication paths $C_m$ that exist between one of the communication interfaces $I_{ji}$ (here $I_{2i}$) of the second item of equipment $E_j$ (here E2) and the communication interface $I_{j'i}$ (here $I_{1i}$) of the first item of equipment $E_{j'}$ (here E1). This selection is made according to at least the maximum bandwidth that can be attained in reception $K_{1i}$ (here $K_{11}$) for the interface $I_{1i}$ (here $I_{11}$) and bandwidths that can be (immediately) used on the different existing communication paths $C_m$. In order for a communication path $C_m$ to be selected, the bandwidth that can be used on this communication path $C_m$ must be greater than or equal to the maximum bandwidth that can be attained in reception for the interface to which it is connected.

It will be noted that, when the first item of equipment E1 comprises at least two interfaces $I_{1i}$ having different communication addresses (which is not the case in the example shown) and a control message has been received comprising second items of local information (representative of use priority levels associated with each of the interfaces $I_{1i}$), one of these interfaces $I_{1i}$ is first selected to constitute one end of the communication path that must be selected (here $C_1$), according to use priority levels that are associated with them. For this purpose, it can be started by constituting a list in which the interfaces $I_{1i}$ are classed according to their respective use priority levels according to a descending order. Then for example the selection of an interface can be carried out from among the communication interfaces $I_{1i}$ of the first item of equipment E1 that are associated with a maximum bandwidth that can be attained in reception $K_{1i}$ (provided in a control message previously received) that is greater than the bandwidth of packets of the communication session considered, that must be transmitted via the second item of equipment E2 to the first item of equipment E1.

For example, when the first interface $I_{21}$ of the second item of equipment E2 has greater priority than the second interface $I_{22}$ of this same second item of equipment E2, this first interface $I_{21}$ is preferably selected, and thus the first communication path $C_1$ (that pairs the first interface $I_{21}$ to the single interface $I_{11}$) to transmit packets of the communication session (at least for a certain period) of the second item of equipment E2 to the first item of equipment E1, provided that the bandwidth that can be used on this first communication path C1 is greater than or equal to the maximum bandwidth that can be attained in reception $K_{21}$ for the first interface $I_{21}$.

It will be noted that, when the bandwidth $B_m$, that can be (effectively) used on the selected communication path $C_m$ (for example $C_1$), is (or becomes) strictly less than the maximum bandwidth that can be attained in reception $K_{1i}$ (here $K_{11}$) for the interface $I_{1i}$ (here $I_{11}$), at least one other communication path $C_m$ ($m \neq 1$, here $m = 2$) can be selected that exists between an interface $I_{2i'}$ of the second item of equipment E2 and the interface $I_{11}$ of the first item of equipment E1. When several communication paths can potentially be used, the selection of communication path(s) can, for example, be made according to the time $R_m$ required to transmit packets on these communication paths $C_m$ (with $m \neq 1$). The packets of the communication session are then transmitted from the second item of equipment E2 to the first item of equipment E1, either in a shared manner over the communication path initially selected $C_1$ and the newly selected communication path $C_m$ ($m \neq 1$, here $m = 2$), or exclusively over the communication path newly selected $C_m$ ($m \neq 1$, here $m = 2$). These situations can occur when the communication path initially selected $C_1$ takes a part of the network (typically on the Internet) that is temporarily heavily used, or even saturated.

It will be noted that the second method can be implemented by means of second devices (for determination of communication path(s)) $D2_j$ that are associated respectively with the items of equipment $E_j$. Each second device $D2_j$ is this responsible for determining one or several communication paths.

For example, and as shown in a non-restrictive manner, each second device $D2_j$ can comprise first means of selection MS1 responsible for selecting at least one communication path $C_m$ according to at least one maximum bandwidth that can be attained in reception $K_{ji}$, as well as possibly and previously according to the use priority levels that are associated with the different existing communication paths.

It is understood here by "associated" both the fact of being an integral part of an item of equipment $E_j$

(as shown) and the fact of being paired directly or indirectly with an item of equipment Ej. Consequently, a second device (for generation of communication path(s)) $D2_j$ can be implemented in the form of software modules, or electronic circuits, or a combination of electronic circuits and software modules.

The invention is not limited to embodiments of the method for transmission of information, the method for determination of communication path(s), the device for generation of control messages, the device for determination packet communication path(s), and items of communication equipment, described previously, only as an example, but encompasses any variants that may be considered by those skilled in the art within the scope of the claims hereafter.

**Claims**

1. Method for reception of packets of a communication session using at least two communication paths established between two communication equipments ($E_1$, $E_2$), a first communication equipment ($E_1$) having at least one communication interfaces ($I_{11}$) having a communication address, and a second ($E_2$) communication equipment having at least two communication interfaces ($I_{21}$, $I_{22}$) having different communication addresses, the method comprises
   a step of generating in said first communication equipment ($E_1$) a control message containing each communication address of each of the communication interfaces ($I_{11}$) associated with a first item of information representative of a maximum bandwidth that can be attained in reception ;
   a step of transmitting said control message to said second communication equipment ($E_2$) in order to determine at least one communication path;
   a step of receiving in said first communication equipment ($E_1$) from said second communication equipment ($E_2$), packets of said communication session on at least one of the communication paths ($C_1$,$C_2$) existing between one of the communication interfaces ($I_{21}$,$I_{22}$) of said second communication equipment ($E_2$) and one of the communications interfaces ($I_{11}$) of said first communication equipment (E1) wherein said at least one communication path used in reception is determined according to the maximum bandwidth that can be attained in reception for this interface ($I_{11}$) of said first communication equipment ($E_1$) and bandwidths that can be used on said communication paths ($C_1$,$C_2$).

2. Method according to claim 1, **characterized in that** in said step of generating a control message, said generated control message also contains, for each communication interface ($I_{11}$), a second item of information representative of a use priority level of said communication interface ($I_{11}$).

3. Method according to one of claims 1 and 2, **characterized in that** said maximum bandwidth that can be attained in reception at the level of an interface ($I_{11}$) is equal to the average value of the bandwidth that can be used in reception at the level of this interface ($I_{11}$) for said communication session considered.

4. Method according to one of claims 1 to 3, **characterized in that** each control message is in accordance with the SCTP transport protocol.

5. Method for transmission of packets of a communication session using at least two communication paths established between two communication equipment ($E_1$, $E_2$), a first communication equipment ($E_1$) having at least one communication interface ($I_{11}$) having a communication address and a second communication equipment ($E_2$) having at least two communication interfaces ($I_{21}$, $I_{22}$) having different communication addresses, the method comprises
   a step of receiving, from said first communication equipment ($E_1$), a control message containing each communication address of each of the communication interfaces ($I_{11}$) associated with a first item of information representative of a maximum bandwidth that can be attained in reception;
   a step of selecting at least one communication path ($C_1$,$C_2$) existing between a communication interface ($I_{11}$) of said first communication equipment ($E_1$) and a communication interface ($I_{21}$, $I_{22}$) of said second communication equipment ($E_2$) according to the maximum bandwidth that can be attained in reception for this first interface ($I_{11}$) and bandwidths that can be used on said communication paths, for the purpose of transmission of packets of said communication session from said second communication equipment ($E_2$) to said first communication equipment ($E_1$).

6. Method according to claim 5, **characterized in that**, when said first communication equipment ($E_1$) comprises at least two communication interfaces ($I_{11}$) having different communication addresses, one of these communication interfaces ($I_{11}$) is selected so that it constitutes one end of said selected communication path, according to use priority levels that are associated with them.

7. Method according to claim 6, **characterized in that** said selection is carried out among the communication interfaces ($I_{11}$) of said first communication equipment ($E_1$) that is associated with a maximum authorized bandwidth in reception greater than the bandwidth of packets to be transmitted of said communication session.

8. Method according to one of claims 5 to 7, **charac-**

terized in that, when the bandwidth that can be used on said selected communication path is strictly less than said maximum bandwidth that can be attained in reception for said communication interface ($I_{11}$) of said first communication equipment ($E_1$) that constitutes one end of said selected communication path, at least one other of the communication paths is selected that exists between another of said communication interfaces ($I_{21}$, $I_{22}$) of said second communication equipment ($E_2$) and said communication interface ($I_{11}$) of said first communication equipment ($E_1$), so that packets of said communication session are transmitted on each communication path selected.

9. A communication equipment ($E_1$) for reception of packets of a communication session using at least two communication paths established between two communication equipments ($E_1$, $E_2$), a first communication equipment ($E_1$) having at least one communication interface ($I_{11}$) having a communication address, and a second communication equipment ($E_2$) having at least two communication interfaces ($I_{21}$, $I_{22}$) having different communication addresses, the communication equipment comprises:

means for generating ($D_{11}$) for said first communication equipment ($E_1$) a control message containing each communication address of each of the communication interfaces ($I_{11}$) associated with first item of information representative of a maximum bandwidth that can be attained in reception and intended for the other of said communication equipment ($E_2$);
means for transmitting said control message to said second communication equipment ($E_2$) in order to determine at least one communication path; and
means for receiving, from said second communication equipment, packets of said communication session on at least one of the communication paths ($C_1$, $C_2$) existing between one of the communication interfaces ($I_{21}$, $I_{22}$) of said second communication equipment ($E_2$) and one of the communications interfaces ($I_{11}$) of said first communication equipment ($E_1$) wherein said at least one communication path used in reception is determined according to the maximum bandwidth that can be attained in reception for this interface ($I_{11}$) of said first communication equipment ($E_1$) and bandwidths that can be used on said communication paths.

10. A communication equipment according to claim 9, **characterized in that** it is adapted to generate a control message also containing, for each communication interface ($I_{11}$), a second item of information representative of a use priority level of said communication interface ($I_{11}$).

11. A communication equipment according to one of claims 9 and 10, **characterized in that** it is adapted to introduce into said control message the maximum bandwidth that can be attained in reception at the level of an interface ($I_{11}$) equal to the average value of the bandwidth that can be used in reception at the level of this interface ($I_{11}$) for said communication session considered.

12. A communication equipment according to one of claims 9 to 11, **characterized in that** it is adapted to generate control messages in accordance with the SCTP transport protocol.

13. A communication equipment for transmission of packets of a communication session using at least two communication paths established between two communication equipments ($E_1$, $E_2$), a first communication equipment ($E_1$) having at least one communication interface ($I_{11}$) having a communication address and a second communication equipment ($E_2$) having at least two communication interfaces ($I_{21}$, $I_{22}$) having different communication addresses, the communication equipment comprises
means for receiving, from said first communication equipment ($E_1$), a control message containing each communication address of each of the communication interfaces ($I_{11}$) associated with a first item of information representative of a maximum bandwidth that can be attained in reception;
first means for selection (MS1) of at least one communication path ($C_1$,$C_2$) existing between a communication interface ($I_{11}$) of said first communication equipment ($E_1$) and a communication interface ($I_{21}$, $I_{22}$) of said second communication equipment ($E_2$), according to the maximum bandwidth that can be attained in reception for this first interface ($I_{11}$) and bandwidths that can be used on said communication paths, for the purpose of transmission of packets of said communication session from said second communication equipment ($E_2$) to said first communication equipment ($E_1$).

14. A communication equipment according to claim 13, **characterized in that** said first means of selection (MS1) are also adapted for, when said first communication equipment ($E_1$) comprises at least two communication interfaces ($I_{11}$) having different communication addresses, one of these communication interfaces ($I_{11}$) is selected so that it constitutes one end of said selected communication path, according to use priority levels that are associated with them.

**Patentansprüche**

1. Verfahren für den Empfang von Paketen einer Kommunikationssitzung unter Verwendung mindestens zweier zwischen zwei Kommunikationseinrichtungen ($E_1$, $E_2$) aufgebauter Kommunikationswege, wobei eine erste Kommunikationseinrichtung ($E_1$) mindestens eine Kommunikationsschnittstelle ($I_{11}$) mit einer Kommunikationsadresse aufweist und eine zweite Kommunikationseinrichtung ($E_2$) mindestens zwei Kommunikationsschnittstellen ($I_{21}$, $I_{22}$) mit unterschiedlichen Kommunikationsadressen aufweist, wobei das Verfahren umfasst:

> einen Schritt des Erzeugens einer Steuernachricht, die jede Kommunikationsadresse jeder der Kommunikationsschnittstellen ($I_{11}$), die mit einem ersten Informationselement verknüpft sind, das eine maximale Bandbreite repräsentiert, die beim Empfang erreicht werden kann, enthält, in der ersten Kommunikationseinrichtung ($E_1$);
> einen Schritt des Sendens der Steuernachricht an die zweite Kommunikationseinrichtung ($E_2$), um mindestens einen Kommunikationsweg zu bestimmen;
> einen Schritt des Empfangens von Paketen der Kommunikationssitzung auf mindestens einem der Kommunikationswege ($C_1$, $C_2$), der zwischen einer der Kommunikationsschnittstellen ($I_{21}$, $I_{22}$) der zweiten Kommunikationseinrichtung ($E_2$) und einer der Kommunikationsschnittstellen ($I_{11}$) der ersten Kommunikationseinrichtung ($E_1$) vorhanden ist, in der ersten Kommunikationseinrichtung ($E_1$) von der zweiten Kommunikationseinrichtung ($E_2$), wobei der mindestens eine beim Empfang verwendete Kommunikationsweg in Übereinstimmung mit der maximalen Bandbreite, die beim Empfang für diese Schnittstelle ($I_{11}$) der ersten Kommunikationseinrichtung ($E_1$) erreicht werden kann, und mit den Bandbreiten, die auf den Kommunikationswegen ($C_1$, $C_2$) verwendet werden können, bestimmt wird.

2. Verfahren nach Anspruch 1, **dadurch gekennzeichnet, dass** die erzeugte Steuernachricht in dem Schritt des Erzeugens einer Steuernachricht für jede Kommunikationsschnittstelle ($I_{11}$) außerdem ein zweites Informationselement enthält, das eine Verwendungsprioritätsebene der Kommunikationsschnittstelle ($I_{11}$) repräsentiert.

3. Verfahren nach einem der Ansprüche 1 und 2, **dadurch gekennzeichnet, dass** die maximale Bandbreite, die beim Empfang auf der Ebene einer Schnittstelle ($I_{11}$) erreicht werden kann, gleich dem Mittelwert der Bandbreite ist, die beim Empfang auf der Ebene dieser Schnittstelle ($I_{11}$) für die betrachtete Kommunikationssitzung verwendet werden kann.

4. Verfahren nach einem der Ansprüche 1 bis 3, **dadurch gekennzeichnet, dass** jede Steuernachricht in Übereinstimmung mit dem SCTP-Transportprotokoll steht.

5. Verfahren für die Übertragung von Paketen einer Kommunikationssitzung unter Verwendung mindestens zweier zwischen zwei Kommunikationseinrichtungen ($E_1$, $E_2$) aufgebauter Kommunikationswege, wobei eine erste Kommunikationseinrichtung ($E_1$) mindestens eine Kommunikationsschnittstelle ($I_{11}$) mit einer Kommunikationsadresse aufweist und eine zweite Kommunikationseinrichtung ($E_2$) mindestens zwei Kommunikationsschnittstellen ($I_{21}$, $I_{22}$) mit unterschiedlichen Kommunikationsadressen aufweist, wobei das Verfahren umfasst:

> einen Schritt des Empfangens einer Steuernachricht, die jede Kommunikationsadresse jeder der Kommunikationsschnittstellen ($I_{11}$), die mit einem ersten Informationselement verknüpft sind, das eine maximale Bandbreite repräsentiert, die beim Empfang erreicht werden kann, enthält, von der ersten Kommunikationseinrichtung ($E_1$);
> einen Schritt des Auswählens mindestens eines Kommunikationswegs ($C_1$, $C_2$), der zwischen einer Kommunikationsschnittstelle ($I_{11}$) der ersten Kommunikationseinrichtung ($E_1$) und einer Kommunikationsschnittstelle ($I_{21}$, $I_{22}$) der zweiten Kommunikationseinrichtung ($E_2$) vorhanden ist, in Übereinstimmung mit der maximalen Bandbreite, die beim Empfang für diese Schnittstelle ($I_{11}$) erreicht werden kann, und mit den Bandbreiten, die auf den Kommunikationswegen für die Übertragung von Paketen der Kommunikationssitzung von der zweiten Kommunikationseinrichtung ($E_2$) zu der ersten Kommunikationseinrichtung ($E_1$) verwendet werden können.

6. Verfahren nach Anspruch 5, **dadurch gekennzeichnet, dass**, wenn die erste Kommunikationseinrichtung ($E_1$) mindestens zwei Kommunikationsschnittstellen ($I_{11}$) mit unterschiedlichen Kommunikationsadressen umfasst, eine dieser Kommunikationsschnittstellen ($I_{11}$) in Übereinstimmung mit den Verwendungsprioritätsebenen, die mit ihnen verknüpft sind, ausgewählt wird, damit sie ein Ende des ausgewählten Kommunikationswegs bildet.

7. Verfahren nach Anspruch 6, **dadurch gekennzeichnet, dass** die Auswahl zwischen den Kommunikationsschnittstellen ($I_{11}$) der ersten Kommunika-

tionseinrichtung (E$_1$) ausgeführt wird, die mit einer maximalen autorisierten Bandbreite beim Empfang verknüpft ist, die höher als die Bandbreite von Paketen ist, die von der Kommunikationssitzung übertragen werden sollen.

8. Verfahren nach einem der Ansprüche 5 bis 7, **dadurch gekennzeichnet, dass**, wenn die Bandbreite, die auf dem ausgewählten Kommunikationsweg verwendet werden kann, streng kleiner als die maximale Bandbreite ist, die beim Empfang für die Kommunikationsschnittstelle (I$_{11}$) der ersten Kommunikationseinrichtung (E$_1$), die ein Ende des Kommunikationswegs bildet, erreicht werden kann, mindestens ein anderer der Kommunikationswege ausgewählt wird, der zwischen einer anderen der Kommunikationsschnittstellen (I$_{21}$, I$_{22}$) der zweiten Kommunikationseinrichtung (E$_2$) und der Kommunikationsschnittstelle (I$_{11}$) der ersten Kommunikationseinrichtung (E$_1$) vorhanden ist, sodass Pakete der Kommunikationssitzung auf jedem ausgewählten Kommunikationsweg übertragen werden.

9. Kommunikationseinrichtung (E$_1$) für den Empfang von Paketen einer Kommunikationssitzung unter Verwendung mindestens zweier zwischen zwei Kommunikationseinrichtungen (E$_1$, E$_2$) aufgebauter Kommunikationswege, wobei eine erste Kommunikationseinrichtung (E$_1$) mindestens eine Kommunikationsschnittstelle (I$_{11}$) mit einer Kommunikationsadresse aufweist und eine zweite Kommunikationseinrichtung (E$_2$) mindestens zwei Kommunikationsschnittstellen (I$_{21}$, I$_{22}$) mit unterschiedlichen Kommunikationsadressen aufweist, wobei die Kommunikationseinrichtung umfasst:

Mittel (D1$_1$) zum Erzeugen einer Steuernachricht, die jede Kommunikationsadresse jeder der Kommunikationsschnittstellen (I$_{11}$), die mit einem ersten Informationselement verknüpft sind, das eine maximale Bandbreite repräsentiert, die beim Empfang erreicht werden kann und die für die andere Kommunikationseinrichtung (E$_2$) bestimmt ist, enthält, für die erste Kommunikationseinrichtung (E$_1$);
Mittel zum Senden der Steuernachricht an die zweite Kommunikationseinrichtung (E$_2$), um mindestens einen Kommunikationsweg zu bestimmen; und
Mittel zum Empfangen von Paketen der Kommunikationssitzung auf mindestens einem der Kommunikationswege (C$_1$, C$_2$), der zwischen einer der Kommunikationsschnittstellen (I$_{21}$, I$_{22}$) der zweiten Kommunikationseinrichtung (E$_2$) und einer der Kommunikationsschnittstellen (I$_{11}$) der ersten Kommunikationseinrichtung (E$_1$) vorhanden ist, von der zweiten Kommunikationseinrichtung, wobei der mindestens eine beim Empfang verwendete Kommunikationsweg in Übereinstimmung mit der maximalen Bandbreite, die beim Empfang für diese Schnittstelle (I$_{11}$) der ersten Kommunikationseinrichtung (E$_1$) erreicht werden kann, und mit den Bandbreiten, die auf den Kommunikationswegen verwendet werden können, bestimmt wird.

10. Kommunikationseinrichtung nach Anspruch 9, **dadurch gekennzeichnet, dass** sie dafür ausgelegt ist, eine Steuernachricht zu erzeugen, die für jede Kommunikationsschnittstelle (I$_{11}$) außerdem ein zweites Informationselement enthält, das eine Verwendungsprioritätsebene der Kommunikationsschnittstelle (I$_{11}$) repräsentiert.

11. Kommunikationseinrichtung nach einem der Ansprüche 9 und 10, **dadurch gekennzeichnet, dass** sie dafür ausgelegt ist, in die Steuernachricht die maximale Bandbreite einzuführen, die beim Empfang auf der Ebene einer Schnittstelle (I$_{11}$) erreicht werden kann, die gleich dem Mittelwert der Bandbreite ist, die beim Empfang auf der Ebene dieser Schnittstelle (I$_{11}$) für die betrachtete Kommunikationssitzung verwendet werden kann.

12. Kommunikationseinrichtung nach einem der Ansprüche 9 bis 11, **dadurch gekennzeichnet, dass** sie dafür ausgelegt ist, Steuernachrichten in Übereinstimmung mit dem SCTP-Transportprotokoll zu erzeugen.

13. Kommunikationseinrichtung zur Übertragung von Paketen einer Kommunikationssitzung unter Verwendung mindestens zweier zwischen zwei Kommunikationseinrichtungen (E$_1$, E$_2$) aufgebauter Kommunikationswege, wobei eine erste Kommunikationseinrichtung (E$_1$) mindestens eine Kommunikationsschnittstelle (I$_{11}$) mit einer Kommunikationsadresse aufweist und eine zweite Kommunikationseinrichtung (E$_2$) mindestens zwei Kommunikationsschnittstellen (I$_{21}$, I$_{22}$) mit unterschiedlichen Kommunikationsadressen aufweist, wobei die Kommunikationseinrichtung umfasst:

Mittel zum Empfangen einer Steuernachricht, die jede Kommunikationsadresse jeder der Kommunikationsschnittstellen (I$_{11}$), die mit einem ersten Informationselement verknüpft sind, das eine maximale Bandbreite repräsentiert, die beim Empfang erreicht werden kann, enthält, von der ersten Kommunikationseinrichtung (E$_1$) ;
Mittel (MS1) zur Auswahl mindestens eines Kommunikationswegs (C$_1$, C$_2$), der zwischen einer Kommunikationsschnittstelle (I$_{11}$) der ersten Kommunikationseinrichtung (E$_1$) und einer

Kommunikationsschnittstelle ($I_{21}$, $I_{22}$) der zweiten Kommunikationseinrichtung ($E_2$) vorhanden ist, in Übereinstimmung mit der maximalen Bandbreite, die beim Empfang für diese Schnittstelle ($I_{11}$) erreicht werden kann, und mit den Bandbreiten, die auf den Kommunikationswegen für die Übertragung von Paketen der Kommunikationssitzung von der zweiten Kommunikationseinrichtung ($E_2$) zu der ersten Kommunikationseinrichtung ($E_1$) verwendet werden können.

14. Kommunikationseinrichtung nach Anspruch 13, **dadurch gekennzeichnet, dass** die ersten Mittel (MS1) zur Auswahl außerdem dafür ausgelegt sind, dass, wenn die erste Kommunikationseinrichtung ($E_1$) mindestens zwei Kommunikationsschnittstellen ($I_{11}$) mit unterschiedlichen Kommunikationsadressen umfasst, eine dieser Kommunikationsschnittstellen ($I_{11}$) in Übereinstimmung mit den Verwendungsprioritätsebenen, die ihnen zugeordnet sind, ausgewählt wird, damit sie ein Ende des ausgewählten Kommunikationswegs bildet.


**Revendications**

1. Procédé de réception de paquets d'une session de communication à l'aide d'au moins deux chemins de communication établis entre deux équipements de communication ($E_1$, $E_2$), un premier équipement de communication ($E_1$) ayant au moins une interface de communication ($I_{11}$) ayant une adresse de communication, et un second équipement de communication ($E_2$) ayant au moins deux interfaces de communication ($I_{21}$, $I_{22}$) ayant des adresses de communication différentes, le procédé comprenant :

    une étape de génération dans ledit premier équipement de communication ($E_1$) d'un message de contrôle contenant chaque adresse de communication de chaque interface de communication ($I_{11}$) associé à un premier élément d'information représentatif d'une bande passante maximale atteignable en réception ;
    une étape de transmission dudit message de contrôle audit second équipement de communication ($E_2$) afin de déterminer au moins un chemin de communication ;
    une étape de réception dans ledit premier équipement de communication ($E_1$) à partir dudit second équipement de communication ($E_2$) de paquets de ladite session de communication sur au moins un des chemins de communication ($C_1$, $C_2$) existant entre l'une des interfaces de communication ($I_{21}$, $I_{22}$) dudit second équipement de communication ($E_2$) et l'une des interfaces de communication ($I_{11}$) dudit premier équi-

pement de communication (E1), dans laquelle ledit au moins un chemin de communication utilisé en réception est déterminé selon la bande passante maximale atteignable en réception pour cette interface ($I_{11}$) dudit premier équipement de communication ($E_1$) et les bandes passantes qui peuvent être utilisées sur lesdits chemins de communication ($C_1$, $C_2$).

2. Procédé selon la revendication 1, **caractérisé en ce que** dans ladite étape de génération d'un message de contrôle, ledit message de contrôle généré contient également, pour chaque interface de communication ($I_{11}$), un second élément d'information représentatif d'un niveau de priorité d'utilisation de ladite interface de communication ($I_{11}$).

3. procédé selon l'une des revendications 1 et 2, **caractérisé en ce que** ladite bande passante maximale atteignable en réception au niveau d'une interface ($I_{11}$) est égale à la valeur moyenne de la bande passante qui peut être utilisée en réception au niveau de cette interface ($I_{11}$) pour ladite session de communication considérée.

4. Procédé selon l'une des revendications 1 à 3, **caractérisé en ce que** chaque message de contrôle est conforme au protocole de transport SCTP.

5. Procédé de transmission de paquets d'une session de communication à l'aide d'au moins deux chemins de communication établis entre deux équipements de communication ($E_1$, $E_2$), un premier équipement de communication ($E_1$) ayant au moins une interface de communication ($I_{11}$) ayant une adresse de communication, et un second équipement de communication ($E_2$) ayant au moins deux interfaces de communication ($I_{21}$, $I_{22}$) ayant des adresses de communication différentes, le procédé comprenant :

    une étape de réception, depuis ledit premier équipement de communication ($E_1$), d'un message de contrôle contenant chaque adresse de communication de chaque interface de communication ($I_{11}$) associé à un premier élément d'information représentatif d'une bande passante maximale atteignable en réception ;
    une étape de sélection d'au moins un chemin de communication ($C_1$, $C_2$) existant entre une interface de communication ($I_{11}$) dudit premier équipement de communication ($E_1$) et une interface de communication ($I_{21}$, $I_{22}$) dudit second équipement de communication ($E_2$) selon la bande passante maximale atteignable en réception pour cette première interface ($I_{11}$) et les bandes passantes qui peuvent être utilisées sur lesdits chemins de communication, afin de transmettre des paquets de ladite session de communication dudit second équipement de communication ($E_2$) audit premier équipement de communication ($E_1$).

6. Procédé selon la revendication 5, **caractérisé en ce que**, lorsque ledit premier équipement de communication ($E_1$) comprend au moins deux interfaces de communication ($I_{11}$) ayant des adresses de communication différentes, l'une de ces interfaces de communication ($I_{11}$) est sélectionnée de sorte qu'elle constitue une extrémité dudit chemin de communication sélectionné, conformément aux niveaux de priorité d'utilisation qui leur sont associés.

7. Procédé selon la revendication 6, **caractérisé en ce que** ladite sélection est effectuée parmi les interfaces de communication ($I_{11}$) dudit premier équipement de communication ($E_1$) qui est associé à une bande passante maximale autorisée en réception supérieure à la bande passante des paquets à transmettre de ladite session de communication.

8. Procédé selon l'une des revendications 5 à 7, **caractérisé en ce que**, lorsque la bande passante qui peut être utilisée sur ledit chemin de communication sélectionné est strictement inférieure à ladite bande passante maximale atteignable en réception pour ladite interface de communication ($I_{11}$) dudit premier équipement de communication ($E_1$) qui constitue une extrémité dudit chemin de communication sélectionné, au moins un autre des chemins de communication qui existent entre une autre desdites interfaces de communication ($I_{21}$, $I_{22}$) dudit second équipement de communication ($E_2$) et ladite interface de communication ($I_{11}$) dudit premier équipement de communication ($E_1$) est sélectionné, de sorte que des paquets de ladite session de communication soient transmis sur chaque chemin de communication sélectionné.

9. Équipement de communication ($E_1$) pour la réception de paquets d'une session de communication à l'aide d'au moins deux chemins de communication établis entre deux équipements de communication ($E_1$, $E_2$), un premier équipement de communication ($E_1$) ayant au moins une interface de communication ($I_{11}$) ayant une adresse de communication, et un second équipement de communication ($E_2$) ayant au moins deux interfaces de communication ($I_{21}$, $I_{22}$) ayant des adresses de communication différentes, l'équipement de communication comprenant :

un moyen pour générer ($D1_1$) pour ledit premier équipement de communication ($E_1$) un message de contrôle contenant chaque adresse de communication de chaque interface de communication ($I_{11}$) associé à un premier élément d'information représentatif d'une bande passante maximale atteignable en réception et destiné à l'autre desdits équipements de communication ($E_2$) ;

un moyen pour transmettre ledit message de contrôle audit second équipement de communication ($E_2$) afin de déterminer au moins un chemin de communication ; et

un moyen pour recevoir, à partir dudit second équipement de communication, des paquets de la dite session de communication sur au moins un des chemins de communication ($C_1$, $C_2$) existant entre l'une des interfaces de communication ($I_{21}$, $I_{22}$) dudit second équipement de communication ($E_2$) et l'une des interfaces de communications ($I_{11}$) dudit premier équipement de communication ($E_1$), dans lequel ledit au moins un chemin de communication utilisé en réception est déterminé selon la bande passante maximale atteignable en réception pour cette interface ($I_{11}$) dudit premier équipement de communication ($E_1$) et les bandes passantes qui peuvent être utilisées sur lesdits chemins de communication.

10. Équipement de communication selon la revendication 9, **caractérisé en ce qu'**il est adapté pour générer un message de contrôle contenant également, pour chaque interface de communication ($I_{11}$), un second élément d'information représentatif d'un niveau de priorité d'utilisation de ladite interface de communication ($I_{11}$).

11. Équipement de communication selon l'une des revendications 9 et 10, **caractérisé en ce qu'**il est adapté pour introduire dans ledit message de contrôle la bande passante maximale atteignable en réception au niveau d'une interface ($I_{11}$) égale à la valeur moyenne de la bande passante qui peut être utilisée en réception au niveau de cette interface ($I_{11}$) pour ladite session de communication considérée.

12. Équipement de communication selon l'une des revendications 9 à 11, **caractérisé en ce qu'**il est adapté pour générer des messages de contrôle conformément au protocole de transport SCTP.

13. Équipement de communication pour la transmission de paquets d'une session de communication à l'aide d'au moins deux chemins de communication établis entre deux équipements de communication ($E_1$, $E_2$), un premier équipement de communication ($E_1$) ayant au moins une interface de communication ($I_{11}$) ayant une adresse de communication, et un second équipement de communication ($E_2$) ayant au moins deux interfaces de communication ($I_{21}$, $I_{22}$) ayant des adresses de communication différentes, l'équipement de communication comprenant :

un moyen pour recevoir, à partir dudit premier équipement de communication ($E_1$), un message de contrôle contenant chaque adresse de communication de chaque interface de communication ($I_{11}$) associé à un premier élément d'information représentatif d'une bande passante maximale atteignable en réception ;

un premier moyen de sélection (MS1) d'au moins un chemin de communication ($C_1$, $C_2$) existant entre une interface de communication ($I_{11}$) dudit premier équipement de communication ($E_1$) et une interface de communication ($I_{21}$, $I_{22}$) dudit second équipement de communication ($E_2$), selon la bande passante maximale atteignable en réception pour cette première interface ($I_{11}$) et les bandes passantes qui peuvent être utilisées sur lesdits chemins de communication, afin de transmettre des paquets de ladite session de communication dudit second équipement de communication ($E_2$) audit premier équipement de communication ($E_1$).

14. Équipement de communication selon la revendication 13, **caractérisé en ce que** ledit premier moyen de sélection (MS1) est également adapté pour que, lorsque ledit premier équipement de communication ($E_1$) comprend au moins deux interfaces de communication ($I_{11}$) ayant des adresses de communication différentes, l'une de ces interfaces de communication ($I_{11}$) soit sélectionnée de sorte qu'elle constitue une extrémité dudit chemin de communication sélectionné, conformément aux niveaux de priorité d'utilisation qui leur sont associés.

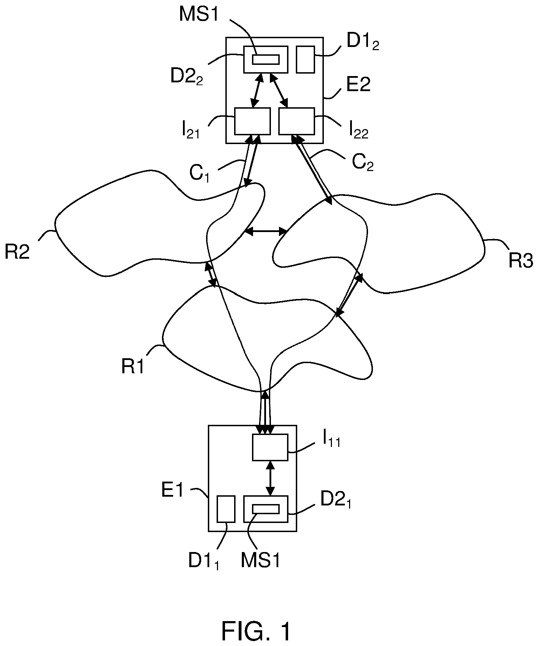

FIG. 1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20080310419 A